(19) Europäisches Patentamt
European Patent Office
Office européen des brevets

(11) EP 1 063 239 A1

(12) **DEMANDE DE BREVET EUROPEEN**

(43) Date de publication:
**27.12.2000 Bulletin 2000/52**

(51) Int Cl.[7]: **C07F 5/00**, C08G 63/08

(21) Numéro de dépôt: **99401584.0**

(22) Date de dépôt: **25.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeurs:
- **SOCIETE DE CONSEILS DE RECHERCHES ET D'APPLICATIONS SCIENTIFIQUES (S.C.R.A.S.)**
**75016 Paris (FR)**
- **CENTRE NATIONAL DE LA RECHERCHE SCIENTIFIQUE**
**75794 Paris Cédex 16 (FR)**

(72) Inventeur: **La désignation de l'inventeur n'a pas encore été déposée**

(74) Mandataire: **Bourgouin, André**
**BEAUFOUR IPSEN (S.C.A.F.)**
**42, rue du Docteur Blanche**
**75016 Paris (FR)**

(54) **Nouveaux composés possédant un lanthanide et un ligand tridentate, leur procédé de préparation et leur application notamment comme catalyseurs de polymérisation**

(57) La présente invention concerne de nouveaux composés possédant un lanthanide et possédant un ligand tridentate, un procédé pour leur préparation et leur utilisation notamment en tant que catalyseurs de polymérisation.

EP 1 063 239 A1

## Description

La présente invention concerne de nouveaux composés possédant un lanthanide et possédant un ligand tridentate, un procédé pour leur préparation et leur utilisation notamment en tant que catalyseurs de polymérisation.

On connaît l'utilisation des dérivés des lanthanides comme catalyseurs pour la polymérisation et la copolymérisation d'oléfines (Gibson et coll., Angew. Chem., Int. Ed. Engl., (1999) 38, 428) et d'hétérocycles (Yao et coll., J. Polymer. Sci. Part A : Polymer Chem., (1996) 34, 1799).

Cependant il a été montré que chaque type de catalyseurs utilisés pour les polymérisations ou copolymérisations, donne respectivement des polymères ou des copolymères différents notamment en raison de réactions de transestérification qui conduisent à des inversions des centres stéréogènes (Jedlinski et coll., Macromolecules, (1990) 191, 2287 ; Munson et coll., Macromolecules, (1996) 29, 8844 ; Montaudo et coll., Macromolecules, (1996) 29, 6461). Le problème est donc de trouver des systèmes catalytiques nouveaux afin d'obtenir de nouveaux polymères ou copolymères, et plus particulièrement des copolymères séquencés. L'utilisation de systèmes catalytiques permettant d'obtenir des copolymères séquencés, permet le contrôle de l'enchaînement des monomères afin d'obtenir des copolymères spécifiques possédant des propriétés propres. Ceci est particulièrement intéressant pour les copolymères biocompatibles dont la biodégradation est influencée par cet enchaînement.

L'invention a ainsi pour objet les produits de formule générale 1

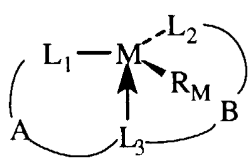

(1)

dans laquelle

| | |
|---|---|
| M | représente un lanthanide ; |
| $R_M$ | représente l'atome d'hydrogène, un atome d'halogène ou un radical alkyle, cycloalkyle, aryle, alkoxy, cycloalkoxy, aryloxy, alkylthio, cycloalkylthio, arylthio, amino, alkylamino, dialkylamino, cycloalkylamino, di(cycloalkyl)amino, alkyl(cycloalkyl)amino, arylamino, diarylamino, alkylarylamino ou (cycloalkyl)arylamino ; |
| A et B | représentent, indépendamment, une chaîne carbonée de 2 à 4 atomes de carbone, optionellement substituée par l'un des radicaux substitués (par un ou plusieurs substituants identiques ou différents) ou non substitués suivants : alkyle, cycloalkyle ou aryle, dans lesquels ledit substituant est un atome d'halogène, le radical alkyle, nitro ou cyano ; |
| $L_1$, $L_2$ et $L_3$ | représentent, indépendamment, un groupe de formule $-E_{15}(R_{15})-$ dans laquelle<br>$E_{15}$ est un élément du groupe 15 et<br>$R_{15}$ représente l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano ; un radical de formule $RR'R''E_{14}$- dans laquelle $E_{14}$ est un élément du groupe 14 et R, R' et R'' représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule $SO_2R'_{15}$ dans laquelle $R'_{15}$ représente un atome d'halogène, un radical alkyle, haloalkyle ou aryle éventuellement substitué par un ou plusieurs substituants choisis parmi les radicaux alkyle, haloalkyle et halogène. |

Dans les définitions indiquées ci-dessus, l'expression halogène représente un atome de fluor, de chlore, de brome ou d'iode, de préférence chlore. L'expression alkyle représente de préférence un radical alkyle ayant de 1 à 6 atomes de carbone linéaire ou ramifié et en particulier un radical alkyle ayant de 1 à 4 atomes de carbone tels que les radicaux méthyle, éthyle, propyle, isopropyle, butyle, isobutyle, sec-butyle et tert-butyle.

Le terme haloalkyle désigne de préférence les radicaux dans lesquels le radical alkyle est tel que défini ci-dessus et est substitué par un ou plusieurs atomes d'halogène tel que défini ci-dessus comme, par exemple, bromoéthyle, trifluorométhyle, trifluoroéthyle ou encore pentafluoroéthyle. Les radicaux alkoxy peuvent correspondre aux radicaux dans lesquels le radical alkyle est tel que défini ci-dessus. On préfère les radicaux méthoxy, éthoxy, isopropyloxy

ou tert-butyloxy. Les radicaux alkylthio représentent de préférence les radicaux dans lesquels le radical alkyle est tel que défini ci-dessus comme, par exemple, méthylthio ou éthylthio. Les radicaux alkylamino et dialkylamino représentent de préférence les radicaux dans lesquels le radical alkyle est tel que défini ci-dessus comme, par exemple, méthylamino ou diméthylamino.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentadiène, cyclohexadiène. Les radicaux cycloalkoxy peuvent correspondre aux radicaux dans lesquels le radical cycloalkyle est tel que défini ci-dessus. On préfère les radicaux cyclopropyloxy, cyclopentyloxy ou cyclohexyloxy. Les radicaux cycloalkylthio peuvent correspondre aux radicaux dans lesquels le radical cycloalkyle est tel que défini ci-dessus comme par exemple cyclohexylthio. Les radicaux cycloalkylamino et di(cycloalkyl)amino peuvent correspondre aux radicaux dans lesquels le radical cycloalkyle est tel que défini ci-dessus comme par exemple cyclohexylamino et di(cyclohexyl)amino.

Les radicaux aryles peuvent être de type mono ou polycycliques. Les radicaux aryles monocycliques peuvent être choisis parmi les radicaux phényle optionellement substitué par un ou plusieurs radicaux alkyle, tel que tolyle, xylyle, mésityle, cuményle. Les radicaux aryles polycycliques peuvent être choisis parmi les radicaux naphtyle, anthryle, phénanthryle. Les radicaux aryloxy peuvent correspondre aux radicaux dans lesquels le radical aryle est tel défini ci-dessus. On préfère les radicaux phénoxy, 2,4,6-tritertiobutylphénoxy, tolyloxy ou mésityloxy. Les radicaux arylthio désignent de préférence les radicaux dans lesquels le radical aryle est tel que défini ci-dessus comme par exemple dans phénylthio. Les radicaux arylamino et diarylamino désignent de préférence les radicaux dans lesquels le radical aryle est tel que défini ci-dessus comme, par exemple, phénylamino ou diphénylamino.

Les radicaux alkyl(cycloalkyl)amino peuvent correspondre aux radicaux dans lesquels les radicaux alkyle et cycloalkyle sont tels que défini ci-dessus comme, par exemple méthyl(cyclohexyl)amino. Les radicaux alkylarylamino désignent de préférence les radicaux dans lesquels les radicaux alkyle et aryle sont tels que défini ci-dessus comme, par exemple méthylphénylamino. Les radicaux (cycloalkyl)arylamino peuvent correspondre aux radicaux dans lesquels les radicaux cycloalkyle et aryle sont tels que défini ci-dessus comme, par exemple (cyclohexyl)phénylamino.

Les composés de formule 1 peuvent se présenter sous forme de monomère ou de dimère et plus particulièrement les composés de formule 1 dans laquelle M représente un atome de samarium se présentent généralement sous forme de dimère.

L'invention a plus particulièrement pour objet les produits de formule générale 1 telle que définie ci-dessus, caractérisée en ce que
$R_M$ représente un atome d'halogène ;

A et B représentent, indépendamment, une chaîne carbonée de 2 à 4 atomes de carbone ;
$L_1$, $L_2$ et $L_3$ représentent, indépendamment, un radical de formule $-E_{15}(R_{15})-$ dans laquelle $E_{15}$ est un atome d'azote ou de phosphore et $R_{15}$ représente un radical alkyle ou un radical de formule $RR'R''E_{14}$ dans laquelle $E_{14}$ représente un atome de carbone ou de silicium et R, R' et R" représentent, indépendamment, l'atome d'hydrogène ou un radical alkyle.

De préférence, M représente un atome de samarium ; $R_M$ représente un atome de chlore ; A et B représentent, indépendamment, une chaîne carbonée de 2 atomes de carbone ; $L_1$, $L_2$ et $L_3$ représentent, indépendamment, un radical de formule $-E_{15}(R_{15})-$ dans laquelle $E_{15}$ est un atome d'azote et $R_{15}$ représente un radical méthyle, éthyle, propyle, isopropyle ou un radical de formule $RR'R''E_{14}-$ dans laquelle $E_{14}$ représente un atome de silicium et R, R' et R" représentent, indépendamment, l'atome d'hydrogène ou un radical méthyle, éthyle, propyle ou isopropyle.

Plus particulièrement, l'invention a pour objet le produit décrit ci-après dans les exemples, notamment le produit répondant à la formule suivante :

— $[(Me_3SiNCH_2CH_2)_2NMe]SmCl$.

L'invention a également pour objet un procédé de préparation des produits de formule générale 1 telle que définie ci-dessus, caractérisé en ce que l'on fait réagir un produit de formule I

$$(L_1\text{-}A\text{-}L_3\text{-}B\text{-}L_2)^{2-}\ ,\ 2Y^+ \qquad (I)$$

dans laquelle $L_1$, A, $L_3$, B et $L_2$ ont les significations indiquées ci-dessus et Y représente l'atome d'hydrogène, un métal ou un groupement organométallique, avec un produit de formule II

$$MR_MZ_1Z_2 \quad (II)$$

dans laquelle M et $R_M$ ont les significations indiquées ci-dessus et $Z_1$ et $Z_2$ représentent, indépendamment, un groupe partant, pour obtenir un produit de formule 1 telle que définie ci-dessus.

La réaction d'un composé de formule générale I avec un composé de formule générale II pour obtenir un composé de formule générale 1, peut être réalisée sous atmosphère inerte telle sous atmosphère de fréon ou d'argon, dans un solvant aprotique, à une température comprise entre -90 et +50° C. Les composés 1 ainsi obtenus sont purifiés par les méthodes classiques de purification.

En tant que solvant aprotique, on peut utiliser les hydrocarbures aromatiques tels que benzène, toluène ; des hydrocarbures aliphatiques tels que pentane, heptane, hexane, cyclohexane ; des éthers tels que le diéthyléther, dioxane, tétrahydrofurane, éthyltertiobutyl éther.

Les composés de formule 1 peuvent comporter une ou plusieurs molécules de solvant coordinant utilisé lors du procédé de préparation. L'expression solvant coordinant représente un hydrocarbure aromatique tel que benzène, toluène ; un dialkyle éther cyclique ou acyclique tels que le diéthyléther, dioxane, tétrahydrofurane, éthyltertiobutyléther ; un solvant chloré tels que dichlorométhane, chloroforme ; un nitrile aliphatique ou aromatique tels que acétonitrile, benzonitrile ; une cétone aliphatique ou aromatique, cyclique ou acyclique tels que acétone, acétophénone, cyclohexanone ; un dérivé d'acide carboxylique aliphatique ou aromatique, cyclique ou acyclique tels que acétate d'éthyle, diméthylformamide.

Dans les composés I, Y représente l'atome d'hydrogène, un métal ou un groupement métallique. Le groupement métallique peut être un composé de formule $R'''M_1$ ou $R'''_3M_2$ dans laquelle R''' représente un atome d'halogène ou indifféremment un radical alkyle, cycloalkyle, aryle, alkoxy, cycloalkoxy ou aryloxy définis comme précédemment, $M_1$ est un alcalino-terreux tel que le magnésium ou un atome de zinc ou de mercure et $M_2$ un atome d'étain ou de plomb ; de préférence, le groupement métallique est choisi parmi les groupements MgBr, ZnMe, $SnMe_3$, $SnBu_3$ ou $PbMe_3$. Le métal peut être un métal alcalin choisi parmi le lithium, le sodium ou le potassium.

Dans les composés II, $Z_1$ et $Z_2$ représentent, indépendamment un groupe partant tel qu'un atome d'halogène, un groupement alkyle, cycloalkyle, alkoxy, aryle ou aryloxy défini comme précédemment, ou encore un méthanesulphonyloxy, un benzènesulphonyloxy, p-toluènesulphonyloxy.

Les produits de départ de formule I sont des produits connus ou peuvent être préparés à partir de produits connus. Pour leur synthèse, on peut citer les références suivantes : Cloke et coll., J. Chem. Soc., Dalton Trans. (1995) 25; Wilkinson and Stone, Comprehensive Organometallic Chemistry (1982) vol. 1, 557.

Les produits de formule II sont commerciaux ou peuvent être fabriqués par les méthodes connues de l'homme de métier.

L'invention a également pour objet l'utilisation des produits de formule 1 telle que définie ci-dessus, en tant que catalyseurs pour la mise en oeuvre de (co)polymérisation, c'est à dire de polymérisation ou copolymérisation. Lors de la mise en oeuvre de (co)polymérisation, les composés selon l'invention jouent également le rôle d'initiateur et/ou de régulateur de chaînes.

Les composés de formule 1 sont particulièrement intéressants pour la mise en oeuvre de polymérisation d'hétérocycles. Les hétérocycles peuvent contenir un ou plusieurs hétéroatomes des groupes 15 et/ou 16, et posséder une taille allant de trois à huit chaînons. A titre d'exemple d'hétérocycles répondant à la formulation ci-avant, on peut citer les époxydes, les thioépoxydes, les esters ou thioesters cycliques tels que les lactones, les lactames et les anhydrides.

Les composés de formule 1 sont particulièrement intéressants également pour la mise en oeuvre de (co) polymérisation d'esters cycliques. A titre d'exemple d'esters cycliques, on peut citer les esters cycliques polymères de l'acide lactique et/ou glycolique. Des copolymères statistiques ou séquencés peuvent être obtenus selon que les monomères sont introduits ensemble au début de la réaction, ou séquentiellement au cours de la réaction.

L'invention a également pour objet un procédé de préparation de copolymères, séquencés ou aléatoires, ou de polymères qui consiste à mettre en présence un ou plusieurs monomères, un initiateur et/ou un régulateur de chaînes, un catalyseur de polymérisation et éventuellement un solvant de polymérisation, le dit procédé caractérisé en ce que l'initiateur et/ou le régulateur de chaînes et le catalyseur de polymérisation sont représentés par le même composé qui est choisi parmi les composés de formule (1) telle que définie ci-dessus.

La (co)polymérisation peut s'effectuer soit en solution soit en surfusion. Lors que la (co)polymérisation s'effectue en solution, le solvant de la réaction peut être le (ou l'un des) substrat(s) mis en oeuvre dans la réaction catalytique. Des solvants qui n'interfèrent pas avec la réaction catalytique elle-même, conviennent également. A titre d'exemple de tels solvants, on peut citer les hydrocarbures saturés ou aromatiques, les éthers, les halogénures aliphatiques ou aromatiques.

Les réactions sont conduites à des températures comprises entre la température ambiante et environ 250°

C ; la plage de température comprise entre 40 et 200° C s'avère plus avantageuse. Les durées de réaction sont comprises entre quelques minutes et 300 heures, et de préférence entre 5 minutes et 72 heures.

Ce procédé de (co)polymérisation convient particulièrement bien pour l'obtention de (co)polymères d'esters cycliques, notamment les esters cycliques polymères de l'acide lactique et/ou glycolique. Les produits obtenus tels que le copolymère lactique glycolique, biodégradables, sont avantageusement utilisés comme support dans des compositions thérapeutiques à libération prolongée. Le procédé convient particulièrement bien également à la polymérisation des époxydes, notamment de l'oxyde de propène. Les polymères obtenus sont des composés qui peuvent être utilisés pour la synthèse de cristaux liquides organiques ou encore comme membranes semi-perméables.

L'invention concerne également des polymères ou copolymères susceptibles d'être obtenus par la mise en oeuvre d'un procédé tel que décrit ci-dessus. La polydispersité (Mw/Mn) des (co)polymères ainsi obtenus peut être modifiée en laissant le mélange réactionnel à la température de la réaction après que la conversion du (des) monomère (s) soit totale. Les masses des (co)polymères sont peu affectées lors de ce processus. Ces phénomènes sont dus à des réactions de transestérifications inter- ou intra-moléculaires (Kiecheldorf et coll., Macromolecules, (1988) 21, 286).

Les exemples suivants sont présentés pour illustrer les procédures ci-dessus et ne doivent en aucun cas être considérés comme une limite à la portée de l'invention.

**Exemple 1 :** $[(Me_3SiNCH_2CH_2)_2NMe]SmCl$ (sous forme de dimère avec une molécule de tétrahydrofurane coordinée sur chaque centre métallique)

M = Sm ; $R_M$ = Cl ; A = B = $-CH_2CH_2-$ ; $L_1 = L_2 = NSiMe_3$ ; $L_3$ = NMe

Dans un tube de Schlenk muni d'un barreau aimanté et purgé sous argon, on introduit successivement 1,22 g (4,7 mmol) de $[(Me_3SiNCH_2CH_2)_2NMe]^{2-}$, $2Li^+$ et 10 ml de tétrahydrofurane. Le mélange réactionnel est refroidi à -78° C, puis on introduit une suspension de 1,20 g (4,7 mmol) de $SmCl_3$ dans du tétrahydrofurane. Le mélange réactionnel est ramené à température ambiante puis laissé sous agitation pendant 4 heures à température ambiante. Après évaporation du solvant, le résidu est repris au toluène puis filtré. Après évaporation du solvant, un solide blanc est obtenu. Le composé souhaité est isolé sous forme de cristaux blancs par cristallisation à -20° C dans du toluène (5 ml) (rendement 70 %). Ce composé est caractérisé par spectroscopie de résonnance magnétique multinucléaire et diffraction des rayons-X (Figure 1 et Tableau 1 ci-dessous). Point de fusion : 173° C.

**Exemple 2 :** Préparation d'un copolymère (D,L-lactide / glycolide) aléatoire ayant une composition lactide/ glycolide proche de 70/30

Dans un tube de Schlenk muni d'un barreau aimanté et purgé sous argon, on introduit successivement 0,05g (0,1 mmol) de $[(Me_3SiNCH_2CH_2)_2NMe]SmCl$, 2,1 g (14,6 mmol) de D,L-lactide et 0,72 g (6,2 mmol) de glycolide. Le mélange réactionnel est laissé sous agitation à 180° C pendant 1 heure. Une analyse par RMN du proton permet de vérifier que la conversion des monomère est de 93 % de lactide et 94 % de glycolide. Le rapport des intégrales des signaux correspondants à la partie polylactide (5,20 ppm) et polyglycolide (4,85 ppm) permet d'évaluer la composition du copolymère à 66 % de lactide et 34 % de glycolide. Selon une analyse par GPC, à l'aide d'un étalonnage réalisé à partir de standards de PS de masses 761 à 400000, ce copolymère est un mélange de macromolécules (Mw/Mn = 2,95) de masses assez élevées (Mw = 37500 Dalton).

**Exemple 3 :** Préparation d'un copolymère (D,L-lactide / glycolide) aléatoire de masses élevées

Dans un tube de Schlenk muni d'un barreau aimanté et purgé sous argon, on introduit successivement 0,05g (0,1 mmol) de $[(Me_3SiNCH_2CH_2)_2NMe]SmCl$, 2,1 g (14,6 mmol) de D,L-lactide et 0,72 g (6,2 mmol) de glycolide. Le mélange réactionnel est laissé sous agitation à 160° C pendant 30 minutes. Une analyse par RMN du proton permet de vérifier que la conversion des monomère est de 71 % de lactide et 100 % de glycolide. Le rapport des intégrales des signaux correspondants à la partie polylactide (5,20 ppm) et polyglycolide (4,85 ppm) permet d'évaluer la composition du copolymère à 61 % de lactide et 39 % de glycolide. Selon une analyse par GPC, à l'aide d'un étalonnage réalisé à partir de standards de PS de masses 761 à 400000, ce copolymère est un mélange de macromolécules (Mw/Mn = 1,56) de masses élevées (Mw = 169000 Dalton).

**Exemple 4 :** Modification de la composition, de la masse et de la polydispersité d'un copolymère (D,L-lactide / glycolide)

Dans un tube de Schlenk muni d'un barreau aimanté et purgé sous argon, on introduit successivement 0,050 g (0,1 mmol) de $[(Me_3SiNCH_2CH_2)_2NMe]SmCl$, 2,095 g (10,1 mmol) de D,L-lactide et 1,68 g (10,1 mmol) de glycolide. Le mélange réactionnel est laissé sous agitation à 160° C. Après 1 heure, la conversion des monomères est de 44 % de lactide et 100 % de glycolide selon une analyse par RMN du proton et le rapport des intégrales des signaux correspondants à la partie polylactide (5,20 ppm) et polyglycolide (4,85 ppm) permet d'évaluer la composition du copolymère à 42 % de lactide et 58 % de glycolide. Selon une analyse par GPC, à l'aide d'un étalonnage réalisé à partir de standards de PS de masses 761 à 400000, ce copolymère est un mélange de macromolécules (Mw/Mn = 1,73) de masses assez élevées (Mw = 28265 Dalton). Après 2 heures 30 minutes de plus à 160° C, la conversion de lactide atteint 96 %. La composition du copolymère est alors 49 % de lactide et 51 % de glycolide. L'analyse GPC d'un aliquot montre que la dispersité et la masse ont augmenté (Mw/Mn = 1,84 ; Mw = 47200 Dalton).

Tableau 1 :

| **Longueur des liaisons sélectionnées (en Angström) et angles de liaison (en degré) pour le composé de l'exemple 1** | | | |
|---|---|---|---|
| Sm(1)-N(1) | 2,290 (12) Å | N(2)-C(6) | 1,516 (17) Å |
| Sm(1)-N(2) | 2,574 (9) Å | N(2)-C(7) | 1,482 (17) Å |
| Sm(1)-N(3) | 2,299 (12) Å | C(7)-C(8) | 1,50 (2) Å |
| N(1)-Si(1) | 1,678 (12) Å | C(8)-N(3) | 1,461 (18) Å |
| N(3)-Si(2) | 1,695 (12) Å | Sm(1)-O(1) | 2,519 (8) Å |
| N(1)-C(4) | 1,494 (17) Å | Sm(1)-Cl(1) | 2,773 (3) Å |
| C(4)-C(5) | 1,508 (19) Å | Sm(1)-Cl(2) | 2,797 (3) Å |
| C(5)-N(2) | 1,470 (16) Å | | |
| N(1)-Sm(1)-N(2) | 68,9 (3) ° | Sm(1)-N(1)-C(4) | 116,5 (8) ° |
| N(2)-Sm(1)-N(3) | 71,5 (4) ° | Sm(1)-N(3)-C(8) | 118,7 (9) ° |
| N(1)-Sm(1)-N(3) | 124,1 (4) ° | Sm(1)-N(2)-C(5) | 97,7 (7) ° |
| N(1)-Sm(1)-Cl(1) | 104,0 (3) ° | Sm(1)-N(2)-C(6) | 121,1 (8) ° |
| N(1)-Sm(1)-Cl(2) | 122,1 (3) ° | Sm(1)-N(2)-C(7) | 107,0 (7) ° |

## Revendications

**1.** Composés de formule générale 1

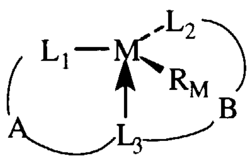

(1)

dans laquelle

| | |
|---|---|
| M | représente un lanthanide ; |
| $R_M$ | représente l'atome d'hydrogène, un atome d'halogène ou un radical alkyle, cycloalkyle, aryle, alkoxy, cycloalkoxy, aryloxy, alkylthio, cycloalkylthio, arylthio, amino, alkylamino, dialkylamino, cycloalkylamino, di(cycloalkyl)amino, alkyl(cycloalkyl)amino, arylamino, diarylamino, alkylarylamino ou (cycloalkyl)arylamino ; |
| A et B | représentent, indépendamment, une chaîne carbonée de 2 à 4 atomes de carbone, optionnellement substituée par l'un des radicaux substitués (par un ou plusieurs substituants identiques ou différents) ou non substitués suivants : alkyle, cycloalkyle ou aryle, dans lesquels ledit substituant est un atome d'halogène, le radical alkyle, nitro ou cyano ; |
| $L_1$, $L_2$ et $L_3$ | représentent, indépendamment, un groupe de formule $-E_{15}(R_{15})-$ dans laquelle<br>$E_{15}$ est un élément du groupe 15 et<br>$R_{15}$ représente l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano ; un radical de formule $RR'R''E_{14}-$ dans laquelle $E_{14}$ est un élément du groupe 14 et R, R' et R'' représentent, indépendamment, l'atome d'hydrogène ou l'un des radicaux substitués (par un ou plusieurs substituants identiques ou différents) ou non-substitués suivants : alkyle, cycloalkyle, aryle, alkoxy, |

cycloalkoxy, aryloxy, alkylthio, cycloalkylthio ou arylthio, dans lesquels ledit substituant est un atome d'halogène, le radical alkyle, nitro ou cyano ; ou un radical de formule $SO_2R'_{15}$ dans laquelle $R'_{15}$ représente un atome d'halogène, un radical alkyle, haloalkyle ou aryle éventuellement substitué par un ou plusieurs substituants choisis parmi les radicaux alkyle, haloalkyle et halogène.

**2.** Composés de formule générale 1 telle que définie à la revendication 1, caractérisés en ce qu'ils se présentent sous forme de monomère ou dimère.

**3.** Composés de formule générale 1 telle que définie à l'une des revendications 1 à 2, caractérisés en ce que

M représente un lanthanide ;
$R_M$ représente un atome d'halogène ;
A et B représentent, indépendamment, une chaîne carbonée de 2 à 4 atomes de carbone ;
$L_1$, $L_2$ et $L_3$ représentent, indépendamment, un radical de formule $-E_{15}(R_{15})-$ dans laquelle $E_{15}$ est un atome d'azote ou de phosphore et $R_{15}$ représente un radicalalkyle ou un radical de formule $RR'R''E_{14}$ dans laquelle $E_{14}$ représente un atome de carbone ou de silicium et R, R' et R'' représentent, indépendamment, l'atome d'hydrogène ou un radical alkyle.

**4.** Composés de formule générale 1 telle que définie à la revendication 3, caractérisés en ce que M représente un atome de samarium ; $R_M$ représente un atome de chlore ; A et B représentent, indépendamment, une chaîne carbonée de 2 atomes de carbone ; $L_1$, $L_2$ et $L_3$ représentent, indépendamment, un radical de formule $-E_{15}(R_{15})-$ dans laquelle $E_{15}$ est un atome d'azote et $R_{15}$ représente un radical méthyle, éthyle, propyle, isopropyle ou un radical de formule $RR'R''E_{14}-$ dans laquelle $E_{14}$ représente un atome de silicium et R, R' et R'' représentent, indépendamment, l'atome d'hydrogène ou un radical méthyle, éthyle, propyle ou isopropyle.

**5.** Composés de formule générale 1 telle que définie à la revendication 4 et répondant à la formule suivante :

$$— [(Me_3SiNCH_2CH_2)_2NMe]SmCl.$$

**6.** Composés de formule générale 1 telle que définie à la revendication 5, caractérisés en ce qu'ils se présentent sous forme de dimère.

**7.** Procédé de préparation des produits de formule générale 1 telle que définie à la revendication 1, caractérisé en ce que l'on fait réagir un produit de formule I

$$(L_1\text{-}A\text{-}L_3\text{-}B\text{-}L_2)^{2-}, 2Y^+ \quad \text{(I)}$$

dans laquelle $L_1$, A, $L_3$, B et $L_2$ ont les significations indiquées à la revendication 1 et Y représente l'atome d'hydrogène, un métal ou un groupement organométallique, avec un produit de formule II

$$MR_MZ_1Z_2 \quad \text{(II)}$$

dans laquelle M et $R_M$ ont les significations indiquées à la revendication 1 et $Z_1$ et $Z_2$ représentent, indépendamment, un groupe partant, pour obtenir un produit de formule 1.

**8.** Utilisation des produits de formule 1 telle que définie à l'une des revendications 1 à 6, en tant que catalyseurs de polymérisation ou copolymérisation.

**9.** Utilisation selon la revendication 8 pour la polymérisation ou copolymérisation d'hétérocycles, notamment les époxydes.

**10.** Utilisation selon la revendication 8 pour la polymérisation ou copolymérisation d'esters cycliques, notamment les esters cycliques polymères de l'acide lactique et/ou glycolique.

**11.** Procédé de préparation de copolymères, séquencés ou aléatoires, ou de polymères qui consiste à mettre en présence un ou plusieurs monomères, un initiateur et/ou un régulateur de chaînes, un catalyseur de polymérisation et éventuellement un solvant de polymérisation, le dit procédé caractérisé en ce que l'initiateur et/ou le régulateur de chaînes et le catalyseur de polymérisation sont représentés par le même composé qui est choisi parmi les composés de formule (1) telle que définie à l'une des revendications 1 à 6.

**12.** Procédé selon la revendication 11, caractérisé en ce que le monomère est choisi parmi les époxydes, et notamment l'oxyde de propène, ou les esters cycliques, et notamment les esters cycliques de l'acide lactique et/ou glycolique.

**13.** Polymères ou copolymères susceptibles d'être obtenus par la mise en oeuvre d'un procédé selon l'une des revendications 11 ou 12.

Fig. 1

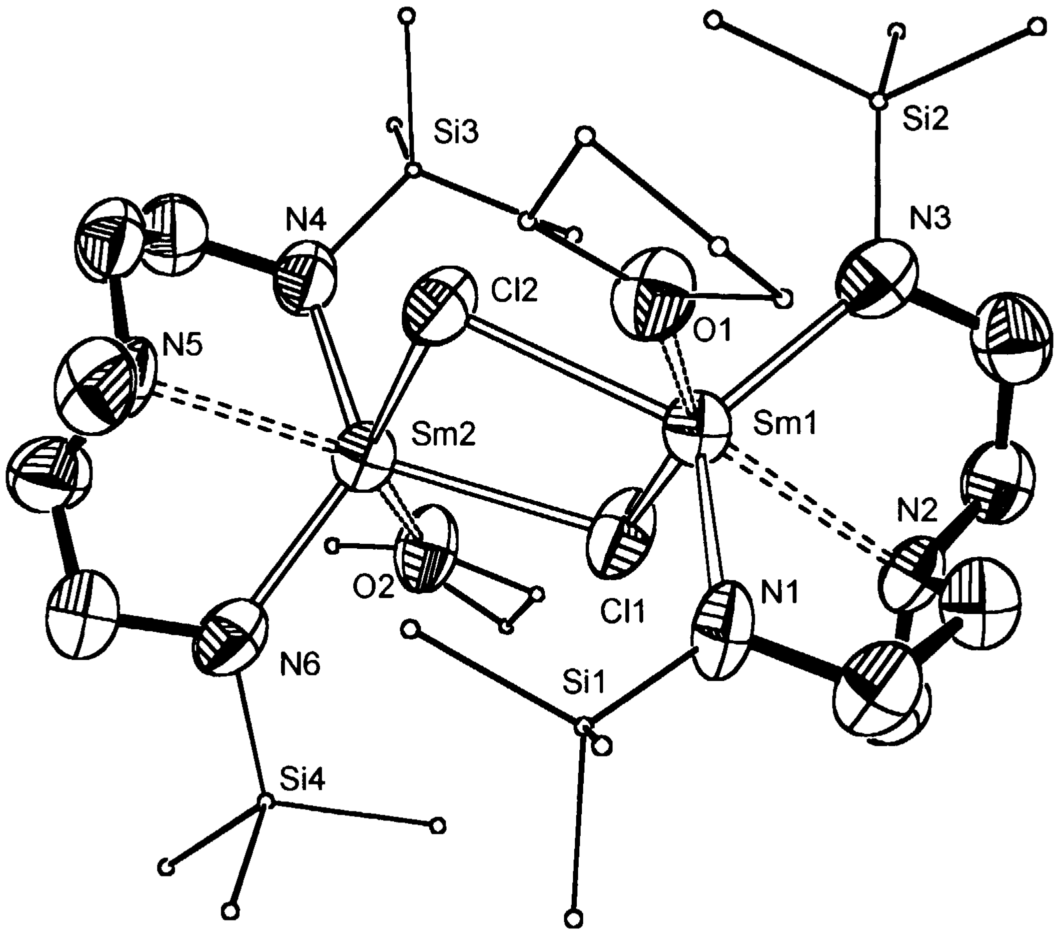

Office européen des brevets

# RAPPORT DE RECHERCHE EUROPEENNE

Numéro de la demande
EP 99 40 1584

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | HUBERT-PFALZGRAF, L.G. ET AL.: "synthesis and characterization of volatile cerium(IV) hexafluoroisopropoxide complexes. Structure of (hpmdien)2Ce(och(cf3)2)6" JOURNAL OF THE CHEMICAL SOCIETY, DALTON TRANSACTACTION,1982, pages 1929-1932, XP002119069 * see compound 7 and 8 * --- | 1 | C07F5/00 C08G63/08 |
| D,A | BRITOVSEK, G.J.P. ET AL.: "the search for new-generation olefin polymerization catalysts: life beyond metallocenes" ANGEWANDTE CHEMIE INTERNATIONAL EDITION, ENGLISH,1999, pages 428-447, XP002119070 * see pages 432-433, section 2.2 * ----- | 8 | |
| | | | **DOMAINES TECHNIQUES RECHERCHES (Int.Cl.7)** |
| | | | C07F C08G |

Le présent rapport a été établi pour toutes les revendications

| Lieu de la recherche | Date d'achèvement de la recherche | Examinateur |
|---|---|---|
| LA HAYE | 15 octobre 1999 | Rinkel, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)